# EUROPEAN PATENT SPECIFICATION

(11) **EP 2 815 993 B1**
(45) Date of publication and mention of the grant of the patent: **22.08.2018**
(21) Application number: 13003093.5
(22) Date of filing: 18.06.2013
(51) Int. Cl.: B65G 43/02

(54) **Splice monitoring system for conveyor belts in mining industry**
Spleißüberwachungssystem für Förderbänder in der Bergbauindustrie
Système de surveillance de jonctions de courroie de transport dans l'industrie minière

(43) Date of publication of application: 24.12.2014
(73) Proprietor: ABB Schweiz AG, 5400 Baden (CH)
(72) Inventor: Oliver, Becker, 69198 Schriesheim (DE); Thomas, Weickert, 69231 Rauenberg (DE)
(74) Representative: ABB Patent Attorneys

(56) References cited:
- WO-A1-2013/080954
- US-B1- 7 779 994

## Description

The invention is related to a splice monitoring system for a conveyor belt in mining industry, comprising a driving pulley for driving a conveyor belt, a first pulley and an optional second pulley and a conveyor belt with at least one splice, which is guided around a part of the circumference of the first pulley, around a part of the circumference of the driving pulley and around a part of the circumference of the optional second pulley if applicable, wherein the first pulley is located before and the optional second pulley is located behind the driving pulley related to the designated movement direction of the conveyor belt.
It is known that due to manufacturing and transportation reasons, pit mining conveyors with a length of several kilometers usually consist of several sections which are connected via splices. The splice strength is dependent on manufacturing quality and is affected by the condition of rubber and steel cord. In addition, due to its dimensions, the splice has to be manufactured on site which also increases the quality fluctuation. Since the splice is a natural weakness of the conveyor, monitoring of the splice health is meaningful to avoid unexpected downtime of the conveyor.
Several systems to monitor the splice strength are already available on the market. Those known solutions are in principal based on dedicated sensors. Some solutions are using markers which are vulcanized into the belt, observing their relative location by suitable sensors and thus detecting the splice elongation. Other solutions exploit the magnetic properties of the steel cords to detect abnormalities within the conveyor structure. The existing solutions are quite error prone when iron ore or copper core which includes iron is transported. Further on, the existing systems require a large effort. US 7,779,994 B1 discloses, for example, a splice monitoring system for a conveyor belt in mining industry according to the preamble of claim 1. Based on this state of the art it is objective of the invention, to provide a splice monitoring system for a conveyor belt in mining industry, which is less sensitive on one side and requires lower effort on the other side. Objective of the invention is also to provide a respective method for splice monitoring.

The problem is solved by a splice monitoring system for a conveyor belt in mining industry according to claim 1. The basic idea of the invention is based on the assumption, that a splice is elongated and its stiffness is reduced, when it is worn out. Thus the elasticity of a splice which is worn out is higher than the elasticity of a splice in good order. Compared with a conveyor belt section without splice, a splice section might have - dependent on how the splice is manufactured in detail - a higher but also a lower elasticity. But in any case a worn out splice has a higher elasticity than the respective splice in good order. And exact this effect is used by the invention to detect a worn out splice. For the explanations in this patent filing it is assumed, that a splice in good order has the same elasticity than a conveyor belt section without splice. But the invention will - of course - also work if for example a splice in good order would have a lower elasticity than a conveyor belt section without splice.

Thus, when applying a force on the conveyor belt the elongation of a splice which is worn out will be - in relation - higher than the elongation of the splices in good order respectively of the conveyor belt sections without splice

During operation of the conveyor belt a driving pulley is applying a traction force on the section of the conveyor belt which is - related to the designated movement direction of the conveyor belt - located before the driving pulley. Such a traction force is not applied on the section of the conveyor belt, which is located in behind the driving pulley. Due to the different forces on the conveyor belt before and behind the driving pulley the respective section of the conveyor belt which is currently located around the part of the circumference of the driving pulley will be shortened while passing around the circumference.

Thus the movement speed of the conveyor belt will be higher at the section before the driving pulley where a traction force is applied compared to the section behind the driving pulley where no traction force is applied. Assuming a homogenous elasticity along the whole length of the conveyor belt and a constant traction force there will be a constant speed difference inbetween the conveyor section before the driving pulley and behind the driving pulley.

A change of this theoretically constant speed difference will rise, if a splice which is worn out is passing the driving pulley. Due to its higher elasticity the length of such a worn out splice is shortened in a higher degree than the length of a splice in good order when passing the driving pulley. This will lead to a temporarily increased speed difference when the worn out splice is passing the driving pulley. This difference is used according to the invention as a base for detecting the wearing out of the splice.

On the other side, if a splice in good order has a lower elasticity than a conveyor belt section without splice, a speed difference will rise, when a splice in good order is passing the driving pulley. This difference will be lower, when the splice is worn out.

Base for determining the speed of the conveyor belt before the driving pulley is the circumferential speed of the first pulley, which is arranged before the driving pulley. A slip between the conveyor belt and the pulley can be assumed to be not existent. Thus a multiplication of the revolution speed of the first pulley - which can be determined for example with a resolver - with the radius of the pulley will result in a value representing the circumferential speed of the first pulley. Taking into account, that the first pulley might be an idler pulley with a rather small diameter, a rather high number of revolutions per length of the conveyor belt can be assumed. Thus even an average resolution of the resolver will be a sufficient base for a precise determination of the circumferential speed of the first pulley.

In an analogous way the circumferential speed of the optional second pulley can be used as base for determining the speed of the conveyor belt behind the driving pulley. In case of an absence of such a second pulley also the circumferential speed of the driving pulley itself can be used as base for the speed of the conveyor, wherein a certain amount of slip has to be assumed. Such a slip can be for example determined in an empirical way.

The first and the optional second pulley are preferably arranged in proximity to the driving pulley, for example within a distance of some meters. Thus it is ensured, that at maximum only one conveyor splice, that's length might be for example some few meters, is inbetween the first and the second pulley respectively the driving pulley. A determined effect within the speed difference can be assigned to a corresponding conveyor splice therewith. Thus it is possible to detect a worn out splice in an easy and reliable way.

According to a further embodiment of the invention the first and/or the optional second pulleys are further driving pulleys. The use of several driving pulleys for the same conveyor belt is not unusual to increase the force which is applicable thereon. The described effect within the speed difference of the conveyor belt before and after a driving pulley is also usable in such a constellation.

According to a further embodiment of the invention the driving pulley is foreseen to apply a temporarily increased torque with an additional excitation share on the conveyor belt. The additional excitation torque might be for example applied in form of a peak, a ramp or an oscillation over the time. Beyond that the evaluation unit is foreseen to determine - upon an increased torque and based on an analysis of a thereby increased circumferential speed of the driving pulley respectively of the first pulley - a value describing the stiffness of the respective section of the conveyor belt, which is currently located before the driving pulley.

Dependent on the additional excitation torque respectively dependent on the resulting additional excitation force applied on the conveyor belt an elongation of the respective section of the conveyor belt will occur. The elongation is as higher as higher the elasticity of the respective section of the conveyor belt is. In case that a worn out splice is located currently just before the driving pulley, the elongation will be stronger than for the other sections of the conveyor belt. The elongation itself is determinable from a respective difference of the circumferential speeds of first pulley and driving pulley. This is a respective criterion for the detection of a worn out splice.

According to a further aspect of the invention the splice monitoring is foreseen to provide information to the evaluation unit whether the at least one conveyor splice is currently located - at least in part - inbetween the two pulleys. Furthermore the splice monitoring system is foreseen to provide the warning signal only in the case that the at least one conveyor splice is currently located - at least in part - inbetween the two pulleys. This is precondition, that a worn out splice is detectable. Thus the reliability of the splice monitoring system is increased therewith since a warning signal is only provideable when it is detectable.

According to another variant of the splice monitoring system it comprises a tension pulley with a tension device for applying a constant tension force on the conveyor belt, wherein on both sides of the tension pulley a respective further pulley is foreseen, wherein the conveyor belt is guided around a part of the circumference of the tension pulley and around a part of the circumference the further pulleys, wherein means are foreseen for measuring respective seesaw-movements of the tension device and the respective circumferential speeds of the further pulleys, wherein respective measured values of the seesaw-movements and of the circumferential speeds are provideable to the evaluation unit and wherein the evaluation unit is foreseen to determine continuously a value describing the stiffness of the respective section of the conveyor belt which is currently located inbetween the further pulleys therefrom.

Comparable to the embodiments of the invention mentioned before, a tension force is applied on the conveyor belt - in this case by the tension device respectively the tension pulley. Since the tension pulley is no driving pulley, the force of the tension device is applied on both adjacent sections of the conveyor belt which are currently located inbetween the tension pulley and the further pulleys. Dependent on the elasticity of the different sections of the conveyor belt the tension force is effecting a respective elongation of the different sections of the conveyor belt. The higher the elasticity of a respective section of the conveyor belt is, the higher is its elongation, wherein the elongation is determined in this case by the seesaw movements of the tension device. The further pulleys are arranged in a distance of for example some meters from the tension pulley. Assuming a homogenous elasticity over the whole length of the conveyor belt no speed difference inbetween the circumferential speed of both further pulleys will occur. Criterion for the detection of a worn out splice is, that a seesaw movement of the tension device is occurring wherein no difference of the circumferential speeds of the further pulleys is detected.

According to a further embodiment of the invention the tension device as such is fixed, so that no seesaw movements will rise but a variable force instead dependent on the elasticity of the conveyor belt, wherein means are foreseen for measuring the variable force and wherein the evaluation unit is foreseen to consider respective measured values of the variable force instead of respective measured values of the seesaw-movements. Possible criterion for the detection of a worn out splice could be, that a change of the tension force is occurring wherein no difference of the circumferential speeds of the further pulleys is detected.

According to a further embodiment of the invention the conveyor belt is steel cord enforced. This is a common type of conveyor belts for mining industry which has a sufficient high mechanical stability for withstanding the needed requirements. A respective splice might be realized by vulcanizing the steel cords of adjacent conveyor belt sections along the length of the splice, for example 5m. A rubber material or such is foreseen for bonding the toothed steel cords together. The mechanical characteristics of respective splices of such conveyor belts corresponds in a good way to the assumptions where the invention is based on, namely that a splice is elongated and its stiffness is reduced, when it is worn out.

The objective of the invention is also solved by a method for splice monitoring of conveyor belts in mining industry by use of a splice monitoring system according to the invention, comprising the following steps:
- measuring the respective circumferential speeds of the two pulleys during operation,
- providing respective measurement values to the evaluation unit,
- analyzing continuously at least the difference of the circumferential speeds of the two pulleys over a time span and deriving a value describing the stiffness of the respective section of the conveyor belt which is currently located inbetween the two pulleys therefrom,
- providing a warning signal in case that the value for the stiffness is falling below a certain limit.

The respective advantages of this method correspond to the advantages of the splice monitoring system as mentioned before.

According to a preferred embodiment of the invention the driving pulley is applying temporarily an increased torque with an additional excitation share on the conveyor belt. Respective to a corresponding elongation of the conveyor belt it is possible to detect a worn out splice if the elongation is exceeding a certain limit. Of course a comparable effect is gained when the torque is temporarily decreased.

According to another variant of the method according to the invention the torque of the driving pulley is taken into account for determining the respective value describing the stiffness of the respective section conveyor belt. Thus a relation inbetween the torque and a respective elongation of a section of the conveyor belt can be used as further criterion for the wearing out of a conveyor splice.

Further advantageous embodiments of the invention are mentioned in the dependent claims.

The invention will now be further explained by means of an exemplary embodiment and with reference to the accompanying drawings, in which:
- Figure 1: shows an exemplary splice monitoring system for a conveyor belt,
- Figure 2: shows exemplary relationship of velocity and force of the conveyor belt along its length,
- Figure 3: shows an exemplary relationship of speed difference of the circumference of the idler pulleys over time and
- Figure 4: shows an exemplary conveyor belt with tension device.

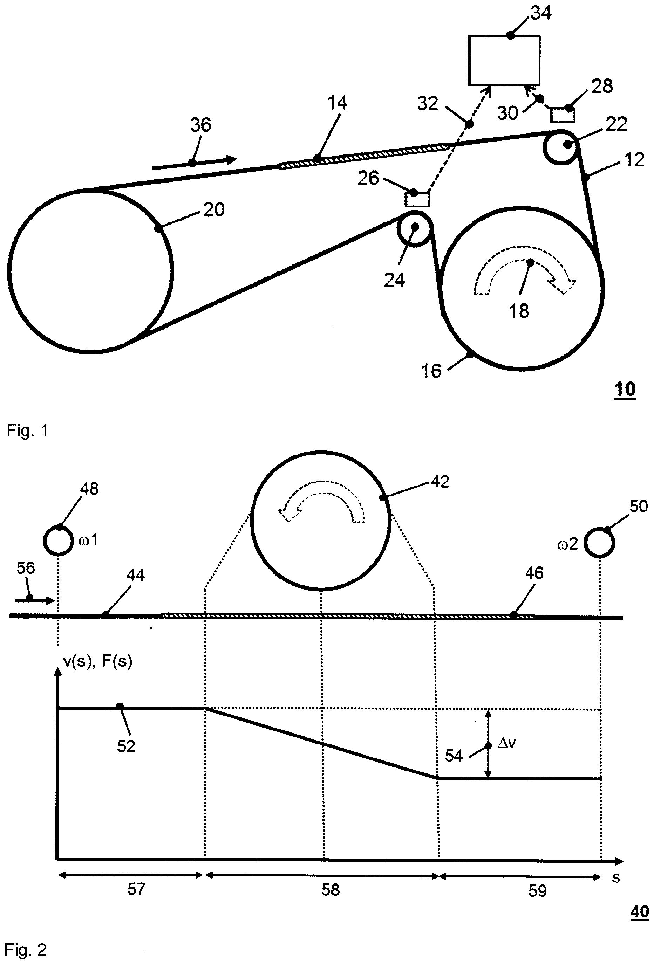

Figure 1 shows an exemplary splice monitoring system for a conveyor belt in a sketch 10. A conveyor belt 12 with a splice 14 is guided around a part of the circumference of a first pulley 22, in this case an idler pulley with a rather small diameter of approximately 50cm. The length of the splice 14 amounts for example 4m wherein the width of the conveyor belt 12 amounts for example 2m. The moving direction of the conveyor belt 12 is indicated with an arrow 36. Behind the first pulley 22 the conveyor belt 12 is guided around a part of the circumference of a driving pulley 16, that's rotational direction is indicated with an arrow 18 and that's diameter amounts for example 2m. After passing the driving pulley 16 the conveyor belt 12 is guided around a part of the circumference of a second pulley 24 and then around a return pulley 20, which is located in a respective distance, for example 2000m. The distance inbetween first 22 and second 24 pulley to the driving pulley 16 amounts some meters and further idler pulleys might be foreseen inbetween. Thus a closed loop of the conveyor belt 12 is build, wherein in reality not one, but for example 10 splices will be foreseen over the whole length of the conveyor belt.
Means 26, 28 for continuously determining the circumferential speeds of the first 22 and second 24 pulley are foreseen, for example by use of a respective resolver. Determined data representing the circumferential speeds are continuously provided to an evaluation unit 34 by means of data connections 30, 32. The evaluation unit might be realized for example by use of Personal Computer with a respective software program running thereon.

In case of a homogeneous elasticity of the conveyor belt 12 a constant speed difference inbetween the circumferential speeds of first 22 and second 24 pulley will arise since the conveyor belt 12 will be shortened while passing around the driving pulley 16 due to a respective decrease of tension force. In the case that a worn out splice is passing the area inbetween first 22 and second 24 pulley it will be shortened in a stronger way compared with a splice in good order or with compared with a conveyor belt section without splice. In this case the normally constant speed difference will temporarily increase which is a criterion for the wearing out of a splice. In this example the evaluation unit 34 is foreseen to provide a warning signal so that the respective splice can be maintained in the near future. It is also possible to observe a respective warning signal over a longer time span, for example over 20 full turns of the conveyor belt 12. In the case that for example in 16 of 20 full turns a warning signal is given for the same splice, there is an increased probability for the wearing out of this splice. In the case, that a warning signal is given only in 2 of 20 full turns this might be also no save criterion for a wearing out of the respective splice.

Figure 2 shows an exemplary relationship of velocity and force 52 of a conveyor belt 44 along its length in a diagram 40. A driving pulley 42, that's rotational direction is indicated with an arrow, is arranged inbetween a first 48 and a second 50 pulley, wherein due to graphical reasons the pulleys 42, 48, 50 are shown along a line. A conveyor belt 44, which is also shown along a line in this figure and that's movement direction is indicated with an arrow 56, is arranged around a respective part of the circumferences of the pulleys 42, 48, 50.

The conveyor belt comprises a splice, which is marked with reference number 46 wherein its length might comprise 5m for example. In total three sections of the conveyor belt 44 are marked. A first section 57 is extending from the first pulley to that point of the driving pulley 42, where the conveyor belt 44 is touching first the surface of the driving pulley 42. A second section 58 corresponds to the length around the circumference of the driving pulley 42 which is in contact with conveyor belt 44. A third section 59 is extending from this point on the circumference of the driving pulley 42, where the conveyor belt 44 is no longer in contact with the driving pulley 42 to the second pulley 50.

In the first section 57 the tension force of the conveyor belt 44 corresponds to the sum of spring tension force of the conveyor belt 44 itself and the force applied by the torque of the driving pulley 42. In the third section 59 the tension force of the conveyor belt 44 corresponds only to the spring tension force, which might be applied by a tension device for example. In the second section 58 the tension force of the conveyor belt 44 is decreasing from the force in the first section 57 to the force in the third section 59. Due to a spring characteristic of the conveyor belt 44 respectively its splice 46, a reduction of the tension force will lead to a shortening of the conveyor belt 44 in the third section 59 compared to the first section 57. Thus the movement speed of the conveyor belt 44 in the third section 59 is reduced therewith. By this reason a theoretical constant difference of the movement speed of the conveyor belt 44 in the first section 57 compared to the third section 59 will rise.

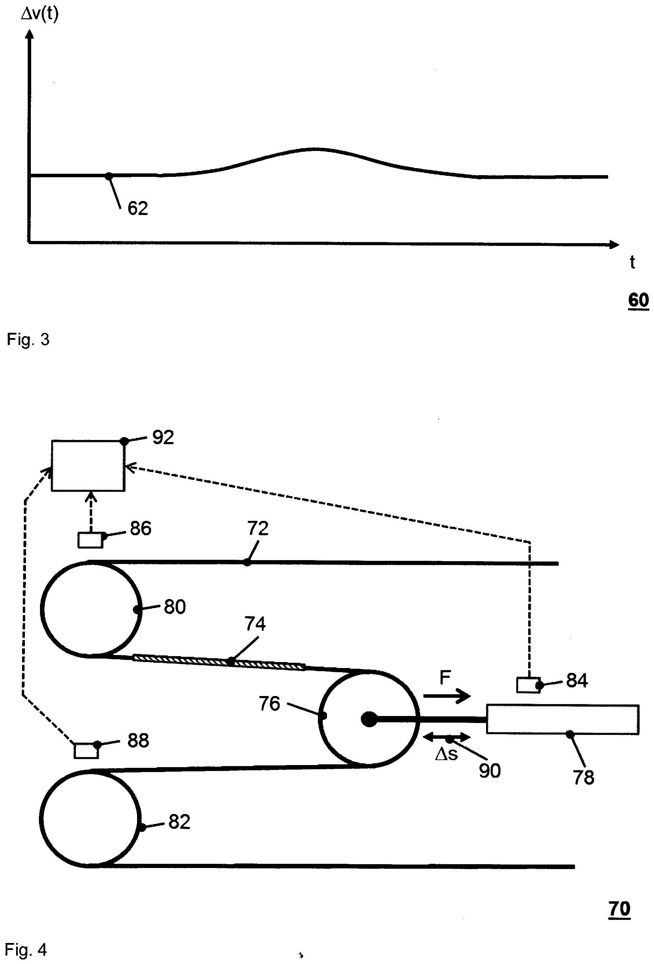

Figure 3 shows an exemplary relationship of speed difference of the circumference of the idler pulleys over time in a diagram 60 in under the assumption, that a worn out splice with increased elasticity is passing the first 57, second 58 and third 59 section according to figure 2. Due to an increased elasticity of a worn out splice the speed difference will temporarily increase, which is a criterion to detect the wearing out of a splice.

Figure 4 shows an exemplary conveyor belt 72 with tension device 78 in a sketch 70. This represents an example for the second end of a conveyor belt system, which is located in a distance of for example some 1000m to the first end which is driven by one or more driving pulleys. The tension device 78 is foreseen to apply a certain spring force on the conveyor belt 72 by use of a tension pulley 76. This tension force will be present as a minimum force over the whole length of the conveyor belt 72, which comprises a splice 74. The conveyor belt is guided around the circumference of the tension pulley and two adjacent further pulleys 80, 82.

The circumferential speed of the further pulleys is determined by means 86, 88 which are foreseen to provide respective values to an evaluation unit 92. Means 84 are foreseen to determine respective seesaw-movements 90 of the tension device 78 and to provide respective values to the evaluation unit 92. Based on those values the evaluation unit 92 determines a worn out splice passing inbetween the two further pulleys 80, 82. Criterion is, that no speed difference between circumferential speeds of both further pulleys 80, 82 occurs wherein a seesaw-movement 90 is determined.

### List of reference signs

- 10: exemplary splice monitoring system for conveyor belts
- 12: conveyor belt
- 14: splice of conveyor belt
- 16: driving pulley
- 18: rotational direction of driving pulley
- 20: return pulley
- 22: first pulley
- 24: second pulley
- 26: means for measuring circumferential speed of second pulley
- 28: means for measuring circumferential speed of first pulley
- 30: first data connection
- 32: second data connection
- 34: evaluation unit
- 36: moving direction of conveyor belt
- 40: exemplary relationship of velocity and force of conveyor belt along its length
- 42: driving pulley
- 44: conveyor belt
- 46: splice of conveyor belt
- 48: first pulley
- 50: second pulley
- 52: velocity and force of the conveyor belt dependent on position
- 54: speed difference between first and second idler pulley
- 56: moving direction of conveyor belt
- 57: first section of conveyor belt
- 58: second section of conveyor belt
- 59: third section of conveyor belt
- 60: exemplary relationship of speed difference over time
- 62: speed difference
- 70: exemplary conveyor belt with tension device
- 72: conveyor belt
- 74: splice of conveyor belt
- 76: tension pulley
- 78: tension device
- 80: further pulley
- 82: further pulley
- 84: means for measuring seesaw-movement
- 86: means for measuring circumferential speed of further pulley
- 88: means for measuring circumferential speed of further pulley
- 90: seesaw-movement
- 92: evaluation unit

## Claims

1. Splice monitoring system (10) for a conveyor belt in mining industry, comprising
• a driving pulley (16, 42) for driving a conveyor belt (12, 44, 72),
• a *return pulley (20),* a first pulley (22, 48) and an optional second pulley (24, 50),
• a conveyor belt (12, 44, 72) with at least one splice (14, 46, 74) which is guided around a part of the circumference of the first (22, 48) pulley, around a part of the circumference the driving pulley (16, 42) and around a part of the circumference of the optional second pulley (24, 50) if applicable, and around a part of the circumference of the return pulley (20),
• wherein the first pulley (22, 48) is located before and the optional second pulley (25, 50) is located behind the driving pulley (16, 42) related to the designated movement direction of the conveyor belt (12, 44, 72),
**characterized in that**
• means (26, 28) for determining the respective circumferential speeds of at least two pulleys during operation of the conveyor belt (12, 44, 72) are foreseen, wherefrom one is the first pulley (22, 48) and the other is the driving pulley (16, 42) or the optional second pulley (24, 50),
• an evaluation unit (34, 92) is foreseen and respective determining values of the circumferential speeds of the pulleys are provideable (30, 32) thereto,
• the evaluation unit (34, 92) is foreseen to determine continuously - based on at least an analysis of the difference of the circumferential speeds of the pulleys over a time span - a value describing the stiffness of the respective section of the conveyor belt (12, 44, 72), which is currently located inbetween the at least two pulleys and
• the evaluation unit (34, 92) is foreseen to provide a warning signal in case that the value for the stiffness is falling below a certain limit.

2. Splice monitoring system according to claim 1, **characterized in that** the first (22, 48) and/or the optional second (24, 50) pulley are further driving pulleys.

3. Splice monitoring system according to claim 1 or 2, **characterized in that** the driving pulley (16, 42) is foreseen to apply a temporarily increased torque with an additional excitation share on the conveyor belt (12, 44, 72).

4. Splice monitoring system according to claim 3, **characterized in that** the evaluation unit (34, 92) is foreseen to determine - upon an increased torque and based on an analysis of an thereby increased circumferential speed of the driving pulley (16, 42) respectively of the first pulley (22, 48) - a value describing the stiffness of the respective section of the conveyor belt (12, 44, 72), which is currently located before the driving pulley (16, 42).

5. Splice monitoring system according to any of the preceding claims, **characterized in that** it is foreseen to provide information to the evaluation unit (34, 92) whether the at least one conveyor splice (14, 46, 74) is currently located - at least in part - inbetween the two pulleys.

6. Splice monitoring system according to claim 5, **characterized in that** it is foreseen to provide the warning signal only in the case that the at least one conveyor splice (14, 46) is currently located - at least in part - inbetween the two pulleys.

7. Splice monitoring system according to any of the preceding claims, **characterized in that** it comprises a tension pulley (76) with a tension device (78) for applying a constant tension force on the conveyor belt (12, 44, 72), wherein on both sides of the tension pulley (76) a respective further pulley (80, 82) is foreseen, wherein the conveyor belt (12, 44, 72) is guided around a part of the circumference of the tension pulley (76) and around a part of the circumference the further pulleys (80, 82), wherein means (84, 86, 88) are foreseen for measuring respective seesaw-movements (90) of the tension device (78) and the respective circumferential speeds of the further pulleys (80, 82), wherein respective measured values of the seesaw-movements (90) and of the circumferential speeds are provideable to the evaluation unit (34, 92) and wherein the evaluation unit (34, 92) is foreseen to determine continuously a value describing the stiffness of the respective section of the conveyor belt (12, 44, 72) which is currently located inbetween the further pulleys (80, 82) therefrom.

8. Splice monitoring system according to claim 7, **characterized in that** the tension device as such is fixed, so that no seesaw movements will rise but a variable force instead dependent on the elasticity of the conveyor belt (12, 44, 72), wherein means are foreseen for measuring the variable force and wherein the evaluation unit (34, 92) is foreseen to consider respective measured values of the variable force instead of respective measured values of the seesaw-movements (90).

9. Splice monitoring system according to any of the preceding claims, **characterized in that** the conveyor belt (12, 44) is steel cord enforced.

10. Method for splice monitoring of a conveyor belt in mining industry by use of a splice monitoring system (10) according to any of claims 1 to 9, comprising the following steps:
• measuring the respective circumferential speeds of the two pulleys during operation,
• providing respective measurement values to the evaluation unit (34, 92),
• analyzing continuously at least the difference of the circumferential speeds of the two pulleys over a time span and deriving a value describing the stiffness of the respective section of the conveyor belt (12, 44, 72) which is currently located inbetween the two pulleys therefrom,
• providing a warning signal in case that the value for the stiffness is falling below a certain limit.

11. Method for splice monitoring according to claim 10, **characterized in that** the driving pulley (16, 42) is applying temporarily an increased torque with an additional excitation share on the conveyor belt (12, 44, 72)

12. Method for splice monitoring according to claim 10 or 11, **characterized in that** the torque of the driving pulley (16, 42) is taken into account for determining the respective value describing the stiffness of the respective section conveyor belt (12, 44, 72).

## Patentansprüche

1. Spleißüberwachungssystem (10) für ein Förderband in der Bergbauindustrie, aufweisend
• eine Antriebsscheibe (16, 42) zum Antreiben eines Förderbands (12, 44, 72),
• eine Umkehrscheibe (20), eine erste Scheibe (22, 48) und eine optionale zweite Scheibe (24, 50),
• ein Förderband (12, 44, 72) mit mindestens einem Spleiß (14, 46, 74), der um einen Teil des Umfangs der ersten (22, 48) Scheibe, um einen Teil des Umfangs der Antriebsscheibe (16, 42) und um einen Teil des Umfangs der optionalen zweiten Scheibe (24, 50), falls vorhanden, und um einen Teil des Umfangs der Umkehrscheibe (20) geführt ist,
• wobei sich die erste Scheibe (22, 48) vor und die optionale zweite Scheibe (25, 50) hinter der Antriebsscheibe (16, 42) bezüglich der designierten Bewegungsrichtung des Förderbands (12, 44, 72) befindet,
**dadurch gekennzeichnet, dass**
• Mittel (26, 28) zum Bestimmen der jeweiligen Umfangsgeschwindigkeiten von mindestens zwei Scheiben während des Betriebs des Förderbands (12, 44, 72) vorgesehen sind, von denen die eine die erste Scheibe (22, 48) ist und die andere die Antriebsscheibe (16, 42) oder die optionale zweite Scheibe (24, 50) ist,
• eine Bewertungseinheit (34, 92) vorgesehen ist und dieser jeweilige Bestimmungswerte der Umfangsgeschwindigkeiten der Scheiben zuführbar (30, 32) sind,
• die Bewertungseinheit (34, 92) zum fortlaufenden Bestimmen - auf Grundlage vom mindestens einer Untersuchung des Unterschieds der Umfangsgeschwindigkeiten der Scheiben über eine Zeitspanne hinweg - eines Werts vorgesehen ist, der die Steifheit des jeweiligen Abschnitts des Förderbands (12, 44, 72) beschreibt, welcher sich derzeit zwischen den mindestens zwei Scheiben befindet, und
• die Bewertungseinheit (34, 92) zum Vorsehen eines Warnsignals vorgesehen ist, falls der Wert für die Steifheit unter eine bestimmte Grenze fällt.

2. Spleißüberwachungssystem nach Anspruch 1, **dadurch gekennzeichnet, dass** die erste (22, 48) und/oder die optionale zweite Scheibe (24, 50) weitere Antriebsscheiben sind.

3. Spleißüberwachungssystem nach einem der Ansprüche 1 oder 2, **dadurch gekennzeichnet, dass** die Antriebsscheibe (16, 42) zum Ausüben eines zeitweilig erhöhten Drehmoments mit einem zusätzlichen Erregungsanteil auf das Förderband (12, 44, 72) vorgesehen ist.

4. Spleißüberwachungssystem nach Anspruch 3, **dadurch gekennzeichnet, dass** die Bewertungseinheit (34, 92) zum Bestimmen - auf ein erhöhtes Drehmoment hin und auf Grundlage einer Untersuchung einer dadurch erhöhten Umfangsgeschwindigkeit der Antriebsscheibe (16, 42) bezüglich der ersten Scheibe (22, 48) - eines Werts vorgesehen ist, der die Steifheit des jeweiligen Abschnitts des Förderbands (12, 44, 72) beschreibt, welcher sich derzeit vor der Antriebsscheibe (16, 42) befindet.

5. Spleißüberwachungssystem nach einem der vorhergehenden Ansprüche, **dadurch gekennzeichnet, dass** es vorgesehen ist, der Bewertungseinheit (34, 92) dahingehend Information zuzuführen, ob sich der mindestens eine Förderspleiß (14, 46, 74) derzeit - mindestens zum Teil - zwischen den zwei Scheiben befindet.

6. Spleißüberwachungssystem nach Anspruch 5, **dadurch gekennzeichnet, dass** es vorgesehen ist, das Warnsignal nur in dem Falle vorzusehen, in dem sich der mindestens eine Förderspleiß (14, 46) derzeit - mindestens zum Teil - zwischen den zwei Scheiben befindet.

7. Spleißüberwachungssystem nach einem der vorhergehenden Ansprüche, **dadurch gekennzeichnet, dass** es eine Spannscheibe (76) mit einer Spannvorrichtung (78) zum Ausüben einer konstanten Spannkraft auf das Förderband (12, 44, 72) aufweist, wobei auf beiden Seiten der Spannscheibe (76) eine jeweilige weitere Scheibe (80, 82) vorgesehen ist, wobei das Förderband (12, 44, 72) um einen Teil des Umfangs der Spannscheibe (76) und um einen Teil des Umfangs der weiteren Scheiben (80, 82) geführt ist, wobei Mittel (84, 86, 88) zum Messen von jeweiligen Schaukelbewegungen (90) der Spannvorrichtung (78) und der jeweiligen Umfangsgeschwindigkeiten der weiteren Scheiben (80, 82) vorgesehen sind, wobei jeweilige gemessene Werte der Schaukelbewegungen (90) und der Umfangsgeschwindigkeiten der Bewertungseinheit (34, 92) zuführbar sind, und wobei die Bewertungseinheit (34, 92) zum fortlaufenden Bestimmen eines Werts vorgesehen ist, der die Steifheit des jeweiligen Abschnitts des Förderbands (12, 44, 72) beschreibt, welcher sich derzeit zwischen den weiteren Scheiben (80, 82) davon befindet.

8. Spleißüberwachungssystem nach Anspruch 7, **dadurch gekennzeichnet, dass** die Spannvorrichtung als solche starr ist, sodass keine Schaukelbewegungen entstehen, sondern stattdessen eine variable Kraft, die von der Elastizität des Förderbands (12, 44, 72) abhängt, wobei Mittel zum Messen der variablen Kraft vorgesehen sind, und wobei die Bewertungseinheit (34, 92) zur Berücksichtigung von gemessenen Werten der variablen Kraft anstelle von jeweiligen gemessenen Werten der Schaukelbewegungen (90) vorgesehen ist.

9. Spleißüberwachungssystem nach einem der vorhergehenden Ansprüche, **dadurch gekennzeichnet, dass** das Förderband (12, 44) stahlkordverstärkt ist.

10. Verfahren zur Spleißüberwachung eines Förderbands in der Bergbauindustrie unter Benutzung eines Spleißüberwachungssystems (10) nach einem der Ansprüche 1 bis 9, die folgenden Schritte aufweisend:
• Messen der jeweiligen Umfangsgeschwindigkeiten der zwei Scheiben während des Betriebs,
• Zuführen von jeweiligen Messwerten zur Bewertungseinheit (34, 92),
• fortlaufendes Untersuchen mindestens des Unterschieds der Umfangsgeschwindigkeiten der zwei Scheiben über eine Zeitspanne hinweg und Ableiten eines Werts, der die Steifheit des jeweiligen Abschnitts des Förderbands (12, 44, 72) beschreibt, welcher sich derzeit zwischen den zwei Scheiben davon befindet,
• Vorsehen eines Warnsignals, falls der Wert für die Steifheit unter eine bestimmte Grenze fällt.

11. Verfahren zur Spleißüberwachung nach Anspruch 10, **dadurch gekennzeichnet, dass** die Antriebsscheibe (16, 42) zeitweilig ein erhöhtes Drehmoment mit einem zusätzlichen Erregungsanteil auf das Förderband (12, 44, 72) ausübt.

12. Verfahren zur Spleißüberwachung nach einem der Ansprüche 10 oder 11, **dadurch gekennzeichnet, dass** das Drehmoment der Antriebsscheibe (16, 42) zum Bestimmen des jeweiligen Werts berücksichtigt wird, der die Steifheit des jeweiligen Abschnitts des Förderbands (12, 44, 72) beschreibt.

## Revendications

1. Système de surveillance de jonctions (10) pour une courroie de transport dans l'industrie minière, comprenant
• une poulie d'entraînement (16, 42) pour entraîner une courroie de transport (12, 44, 72),
• une poulie de renvoi (20), une première poulie (22, 48) et une seconde poulie optionnelle (24, 50),
• une courroie de transport (12, 44, 72) présentant au moins une jonction (14, 46, 74) qui est guidée autour d'une partie de la circonférence de la première poulie (22, 48), autour d'une partie de la circonférence de la poulie d'entraînement (16, 42) et autour d'une partie de la circonférence de la seconde poulie optionnelle (24, 50) si applicable, et autour d'une partie de la circonférence de la poulie de renvoi (20),
• dans lequel la première poulie (22, 48) est située avant et la seconde poulie optionnelle (24, 50) est située derrière la poulie d'entraînement (16, 42) par rapport au sens de déplacement désigné de la courroie de transport (12, 44, 72),
**caractérisé en ce que**
• des moyens (26, 28) pour déterminer les vitesses circonférentielles respectives d'au moins deux poulies pendant le fonctionnement de la courroie de transport (12, 44, 72) sont prévus, dont un est la première poulie (22, 48) et l'autre est la poulie d'entraînement (16, 42) ou la seconde poulie optionnelle (24, 50),
• une unité d'évaluation (34, 92) est prévue et des valeurs de détermination respectives des vitesses circonférentielles des poulies sont communicables (30, 32) à celle-ci,
• l'unité d'évaluation (34, 92) est prévue pour déterminer de façon continue - sur la base d'au moins une analyse de la différence entre les vitesses circonférentielles des poulies sur une période de temps - une valeur qui représente la rigidité de la section respective de la courroie de transport (12, 44, 72), qui est actuellement située entre lesdites au moins deux poulies; et
• l'unité d'évaluation (34, 92) est prévue pour générer un signal d'avertissement dans le cas où la valeur de la rigidité tombe en dessous d'une certaine limite.

2. Système de surveillance de jonctions selon la revendication 1, **caractérisé en ce que** la première poulie (22, 48) et/ou la seconde poulie optionnelle (24, 50) est (sont) une (des) poulie (s) d'entraînement supplémentaire (s) .

3. Système de surveillance de jonctions selon la revendication 1 ou 2, **caractérisé en ce que** la poulie d'entraînement (16, 42) est prévue pour appliquer un couple temporairement accru avec une part d'excitation supplémentaire à la courroie de transport (12, 44, 72).

4. Système de surveillance de jonctions selon la revendication 3, **caractérisé en ce que** l'unité d'évaluation (34, 92) est prévue pour déterminer - lors d'un couple accru et sur la base d'une analyse d'une vitesse circonférentielle ainsi accrue de la poulie d'entraînement (16, 42) respectivement de la première poulie (22, 48) - une valeur qui représente la rigidité de la section respective de la courroie de transport (12, 44, 72), qui est actuellement située avant la poulie d'entraînement (16, 42).

5. Système de surveillance de jonctions selon l'une quelconque des revendications précédentes, **caractérisé en ce qu'**il est prévu de fournir des informations à l'unité d'évaluation (34, 92) qui indiquent si ladite au moins une jonction de courroie de transport (14, 46, 74) est actuellement située - au moins en partie - entre les deux poulies.

6. Système de surveillance de jonctions selon la revendication 5, **caractérisé en ce qu'**il est prévu de générer le signal d'avertissement uniquement dans le cas où ladite au moins une jonction de courroie de transport (14, 46) est actuellement située - au moins en partie - entre les deux poulies.

7. Système de surveillance de jonctions selon l'une quelconque des revendications précédentes, **caractérisé en ce qu'**il comprend une poulie de tension (76) présentant un dispositif de tension (78) pour appliquer une force de tension constante à la courroie de transport (12, 44, 72), dans lequel une poulie supplémentaire respective (80, 82) est prévue sur les deux côtés de la poulie de tension (76), dans lequel la courroie de transport (12, 44, 72) est guidée autour d'une partie de la circonférence de la poulie de tension (76) et autour d'une partie de la circonférence des poulies supplémentaires (80, 82), dans lequel des moyens (84, 86, 88) sont prévus pour mesurer des mouvements de balancier respectifs (90) du dispositif de tension (78) et les vitesses circonférentielles respectives des poulies supplémentaires (80, 82), dans lequel des valeurs mesurées respectives des mouvements de balancier (90) et des vitesses circonférentielles sont communicables à l'unité d'évaluation (34, 92), et dans lequel l'unité d'évaluation (34, 92) est prévue pour déterminer en continu à partir de celles-ci une valeur qui représente la rigidité de la section respective de la courroie de transport (12, 44, 72) qui est actuellement située entre les poulies supplémentaires (80, 82).

8. Système de surveillance de jonctions selon la revendication 7, **caractérisé en ce que** le dispositif de tension est fixé, de telle sorte qu'aucun mouvement de balancier ne survienne mais bien une force variable au lieu de dépendante de l'élasticité de la courroie de transport (12, 44, 72), dans lequel des moyens sont prévus pour mesurer la force variable et dans lequel l'unité d'évaluation (34, 92) est prévue pour considérer des valeurs mesurées respectives de la force variable au lieu de valeurs mesurées respectives des mouvements de balancier (90).

9. Système de surveillance de jonctions selon l'une quelconque des revendications précédentes, **caractérisé en ce que** la courroie de transport (12, 44) est renforcée par des câbles en acier.

10. Procédé de surveillance des jonctions d'une courroie de transport dans l'industrie minière en utilisant un système de surveillance de jonctions (10) selon l'une quelconque des revendications 1 à 9, comprenant les étapes suivantes:
• mesurer les vitesses circonférentielles respectives des deux poulies pendant le fonctionnement,
• fournir des valeurs de mesure respectives à l'unité d'évaluation (34, 92),
• analyser en continu au moins la différence entre les vitesses circonférentielles des deux poulies sur une période de temps et dériver à partir de celle-ci une valeur qui représente la rigidité de la section respective de la courroie de transport (12, 44, 72) qui est actuellement située entre les deux poulies,
• générer un signal d'avertissement dans le cas où la valeur pour la rigidité tombe en dessous d'une certaine limite.

11. Procédé de surveillance de jonctions selon la revendication 10, **caractérisé en ce que** la poulie d'entraînement (16, 42) applique temporairement un couple accru avec une part d'excitation supplémentaire sur la courroie de transport (12, 44, 72)

12. Procédé de surveillance de jonctions selon la revendication 10 ou 11, **caractérisé en ce que** le couple de la poulie d'entraînement (16, 42) est pris en compte pour déterminer la valeur respective qui représente la rigidité de la section respective de la courroie de transport (12, 44, 72).
